# EUROPEAN PATENT APPLICATION

(11) **EP 4 790 471 A1**
(43) Date of publication of application: **12.08.2026**
(21) Application number: 25156426.6
(22) Date of filing: 07.02.2025
(51) Int. Cl.: G02B 21/00, G02B 21/14, G02B 21/36

(54) **COMPUTATIONAL OPTICAL MICROSCOPE WITH MULTI-ANGULAR SCANNING ILLUMINATION**

(71) Applicant: Miltenyi Biotec B.V. & Co. KG, 51429 Bergisch Gladbach (DE)
(72) Inventor: BÜSCHER, Martin, 51429 Bergisch Gladbach (DE); KRIEG, Jürgen, 51429 Bergisch Gladbach (DE); SPIECKER, Heinrich, 51429 Bergisch Gladbach (DE); WAGNER, Rasmus, 51429 Bergisch Gladbach (DE); KIANI, Bahareh, 51429 Bergisch Gladbach (DE)
(74) Representative: Kisters, Michael Marcus

(57) **Abstract**

The invention is directed to a method for obtaining an image of a sample wherein at least one light source provides a plurality of light beams interacting with the sample under a plurality of interaction angles generating a plurality of interaction light beams and detecting the interaction information of the interaction light beams as raw image
characterized in that
a plurality of raw images is obtained by moving the light source and/or the sample relative to each other such that the light beams interact with the sample under different interaction and wherein the raw images are converted into final images by combining the interaction information of the interaction light beams from each raw image having the same interaction angle into final images.

## Description

The invention is directed to a method for imaging a sample, especially a tissue section.

### BACKGROUND

Imaging of biological cells in culture is difficult when the volume above the cellular chamber is not transparent and cannot transmit visible light for illumination, especially for adherent cells attached to the substrate. In fact, adherent cells provide very low contrast when illuminated with a brightfield setup since they are known to be phase objects and only retard the phase of a passing wave and do not absorb the light.

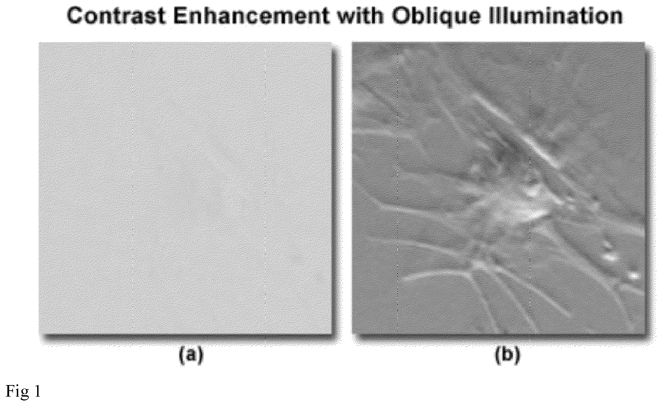

For example, Fig. 1 shows Bovine arterial cell imaged twice using the same microscope with different illumination settings: (a) standard brightfield illumination. (b) oblique brightfield illumination. Note the contrast difference for the adherent cell. Taken from https://www.olympus-lifescience.com/en/microscope-resource/primer/techniques/oblique/obliqueintro/

Established methods such as differential interference contrast imaging or other phase-sensitive imaging methods (e.g. using oblique illumination) need optical transparency on both opposite sides of the sample: one for the detection and one for illumination.

Further known imaging methodes include for example
- Computational microscopy like quantitative phase reconstruction from directed light exposures from different angles.
   ∘ Quantitative differential phase contrast microscopy
   ∘ Fourier Ptychography
- DIC, Hoffmann modulation contrast
- Dodt contrast microscopy
- Oblique illumination for phase contrast
   ∘ https://www.olympus-lifescience.com/de/resources/white-papers/epi-oblique_illumination/
   ∘ Schlieren Imaging / Schlieren Photography / Schlieren microscopy: B. Kachar. "Asymmetric illumination contrast: a method of image formation for video light microscopy," Science 227 (1985): 766-768 or Axelrod, Daniel. "Zero-cost modification of bright field microscopes for imaging phase gradient on cells: Schlieren optics." Cell Biophysics 3 (1981): 167-173
   ∘ https://www.olvmpus-lifescience.com/en/microscope-resource/primer/techniques/oblique/obliquehome/

Novel methods like Fourier ptychography or similar phase-sensitive imaging methods involve a computational approach extracting phase information from multiple exposures with directed illumination from different angles. However, they also require directed illumination from above with a constant angle over the whole field-of-view.

In a cartridge-based cell culture, where the cartridge volume is limited, a setup with both illumination and detection from below would have the advantage of a more compact cartridge. However, with existing methods this is not possible.

### OBJECT OF THE INVENTION

The task of this invention is to provide a method to obtain an image of a weakly absorbing sample with enhanced contrast, compatible with difficult illumination constraints. The method should be designed to work in a be compact cartridge.

Accordingly, object of the invention is a method for imaging a sample wherein at least one light source provides a plurality of light beams interacting with the sample under a plurality of interaction angles generating a plurality of interaction light beams and detecting the interaction information of the interaction light beams as raw image characterized in that a plurality of raw images is obtained by moving the light source and/or the sample relative to each other such that the light beams interact with the sample under different interaction and wherein the raw images are converted into final images by combining the interaction information of the interaction light beams from each raw image having the same interaction angle into final images.

### BRIEF DESCRIPTION OF THE DRAWINGS

Fig. 1 shows an image of a bovine arterial cell with a brightfield microscope and a brightfield microscope with oblique illumination (not according to the invention)
Fig 2 and 3 show schematic views of the invention.
Fig. 4 shows a raw image of adherent cells according to the invention.
Fig. 5 shows a phase-sensitive image of a large area of cells, reconstructed from many raw images.
Fig 6 shows preferred illumination patterns (according to the invention)
Fig. 7 shows effective illumination patterns achievable with this invention, comparable to those used in the literature to quantitatively retrieve phase information.
Fig. 8 shows effective illumination patterns achievable with this invention, with more sensitivity on low-spatial-frequency phase changes.

### DETAILED DESCRIPTION

The problem which is addressed by the invention is that in a crude setting it is not possibility to provide well selected angles of transmitted light. The solution is realized by providing a variety of angles spread over the field of view. The sweet spot where the angle of incidence is ideal could than later be selected within the image. The whole sample can be imaged by taking multiple images combining the subareas of high contrast. The spread of angles over the field of view can be further used to extract different contrasts at the same time.

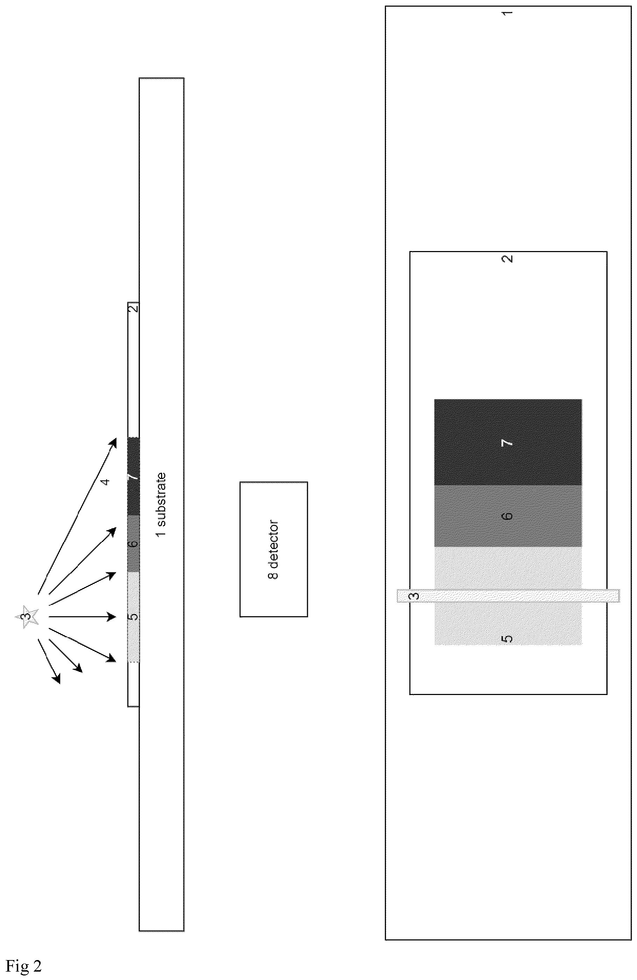

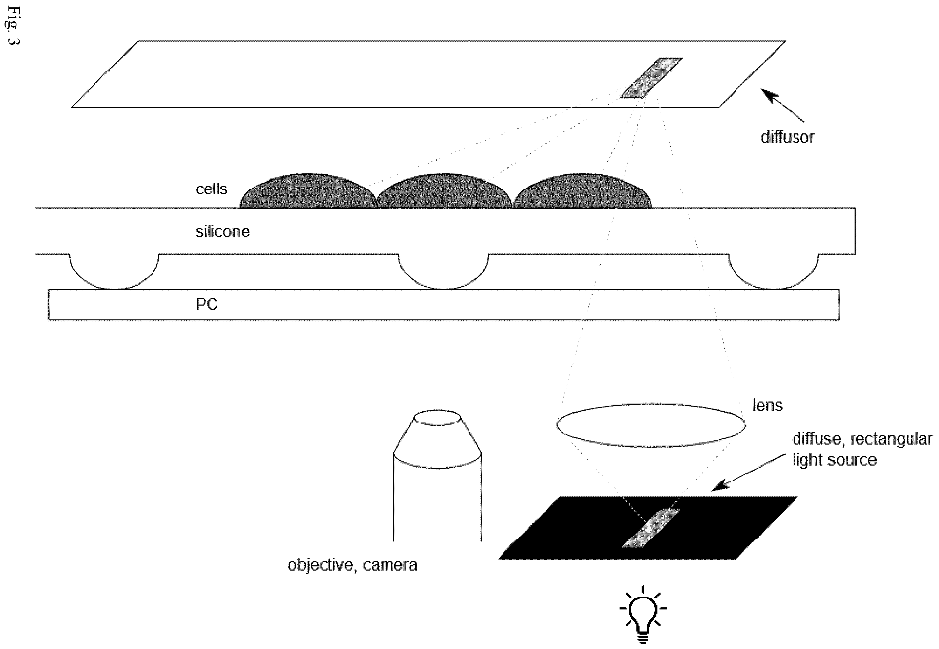

In the method of the invention, a line emitting diffuse light at a distance above the sample is used to illuminate the sample, hereinafter referred to as "illumination line" or just "line". The height above the sample is in the same order of magnitude as the field of view dimensions. Then the angle of illumination varies with the position in the field-of-view, depending on the distance of the point in the object to the illumination line, and the distance of the illumination line to the object plane, as shown in Fig. 2 and Fig 3.

Fig. 2 shows a schematic drawing of the method of the invention with (a) side view, (b) top view. The sample (2) on a substrate (1) is illuminated by a line-shaped light source (3). This light source illuminates the sample with rays (4) at different angles depending on the distance to the line. The sample is therefore divided into at least 3 regions, like 3 to 7 regions, with different illumination angles. The detector (8) acquires a spatially resolved image of the sample.

Fig. 3 shows a schematic view of the method of the invention with a light source from the detector side. The light source is a line projected onto a diffusor which is fixed to the cell substrate.

The line is generated by illuminating a line-shaped part of a continuous diffusing surface above the cell culture chamber, which is part of the consumable wherein the cells are cultured in. By moving the consumable with the sample and the diffusor relative to the microscope with the illumination while acquiring different exposures, one collects images with each point of the sample illuminated under different angles. Post-processing of these different exposures generates synthetic images with information about the scattering, phase, and/or absorption properties of the sample. Since the light levels can be sufficient to support short exposure times in the ms range and below, this method is also suited for image acquisition while constantly moving the sample relative to the microscope and can thus be faster than a classical "stop-and-stare" acquisition method, where the movement is stopped during image acquisition.

Preferable, the information of the interaction light beams from each raw image is combined wherein the interaction light beams have the same range of interaction angles.

The range of interaction angles may be between -0.5NA to 0.5NA, 0.5 NA to 1.2 NA and 1.2 NA to 90°.

In the method of the invention, a diffusing plane at a short distance above the sample plane, which is illuminated from below, may be used. The illumination forms a narrow line on the diffusor. The light emanated from this line is then scattered and diffracted by the sample before being collected by the lens of the imaging system. This way, different parts of the sample are illuminated under different angles within the field of view, as shown in Fig. 3

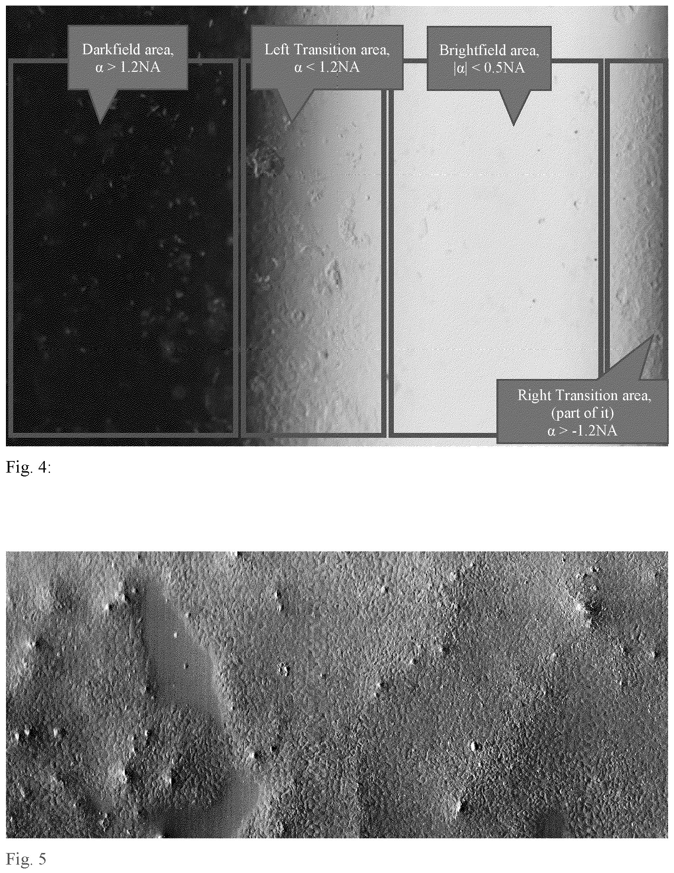

When the geometry of this setup is chosen adequately, this results in a raw image as detected by the microscope optics as shown in Fig. 4. The sample in this case is a rather homogeneous layer of adherent cells. Preferable, the image is divided into three qualitatively different regions: A "darkfield area", a "transition area", and a "brightfield area", matching the above-mentioned rangers of interaction.

By way of example, Fig. 4 shows an image of adherent cells taken with the line-shaped light source. Three different angular regions are identified, yielding different information about cells. The sample is a mono-layer of cultured cells. A 10x, NA 0.25 objective with a 100 mm tube lens was used, imaging onto a 4056x3040 pixel Raspberry Pi HQ Camera with pixel size 1.55 um. Hence, magnification is 5.56x yielding a resolution of 0.279 um/pixel.

The darkfield area on the left of Fig. 4 relates to an angle of illumination is a factor of 1.2 larger than the acceptance angle of the microscope objective lens related to its numerical aperture (NA = sin(a) ~ a for small NA lenses). Cells have a slightly different refractive index with respect to the surrounding media. Thus light is slightly diffracted by the cells. This diffraction has a maximum where the cell membrane or inner membranes are hit by light tangentially. If the light is provided at an angle corresponding to be close to pupil (acceptance angle) a local diffraction results in the light being transmitted or not. This leads to a high contrast.

The transition area in the middle of Fig. 4 relates to angles of illumination which are slightly larger than the acceptance angle of the objective lens. Illumination angles in the range α < 1.2 NA define it. This area yields similar results to the situation of oblique illumination as described, for example, in Cell Biophysics 3 (1981): 167-173. It provides a much improved contrast for phase objects, making the adherent cells in the sample visible.

The brightfield area is characterized by being the most bright part with illumination angles from zero to angles to around 0.5 NA. Here, absorbing features in the sample are detectable. Since the adherent cell sample in Fig. 4 shows has low absorption, it contains almost no information.

The image in Fig. 4 shows also shows the beginning of the symmetric transition area on the right side, which is not further considered here, but can be used to help reconstructing the phase of the sample as shown in "Quantitative differential phase contrast microscopy - Optics Express 2015 -23-9-11394".

Preferable, the light source is line-shaped.

In a embodiment of the invention, the light beam and the sample are moved relative to each other in a continuous movement.

In a variant thereof, the light beam and the sample are moved relative to each other in steps corresponding to ranges of interaction angles

The varying illumination angle from left to right allows for the extraction of different information from the cells. While the brightfield area provides information about absorption (the sample is very transparent, why there is little contrast), the transition area discloses phase information (Oblique illumination has been described to have this effect since the 80s, see for example: B. Kachar. "Asymmetric illumination contrast: a method of image formation for video light microscopy," Science 227 (1985): 766-768 or Axelrod, Daniel. "Zero-cost modification of bright field microscopes for imaging phase gradient on cells: Schlieren optics." Cell Biophysics 3 (1981): 167-173) and the darkfield area offers information about medium-angle scattering intensity.

By moving the sample in the object plane orthogonal to the line orientation while acquiring multiple microscopic images in the way described above, one is able to measure each part of the sample under all illumination angles which are accessible with the geometry of the setup. These parts can then be extracted from the acquisitions to generate a synthetic image. Fig. 5 shows a reconstructed image from many different slices of angular regions cut out of the original images shown in Fig. 4

When the line is placed above the center of the field-of-view, both positive and negative illumination angles are acquired in one image. If the positive and negative angles for each point in the sample are measured, the data can be used for a more comprehensive image reconstruction, including phase reconstruction, as explained in the publication "Optics Express 2015 -23-9-11394".

The at least two light sources may provide at least two pluralities of light beams having different wavelengths. , preferable the at least two pluralities of light beams sharing an angle of 5 to 90° with each other.

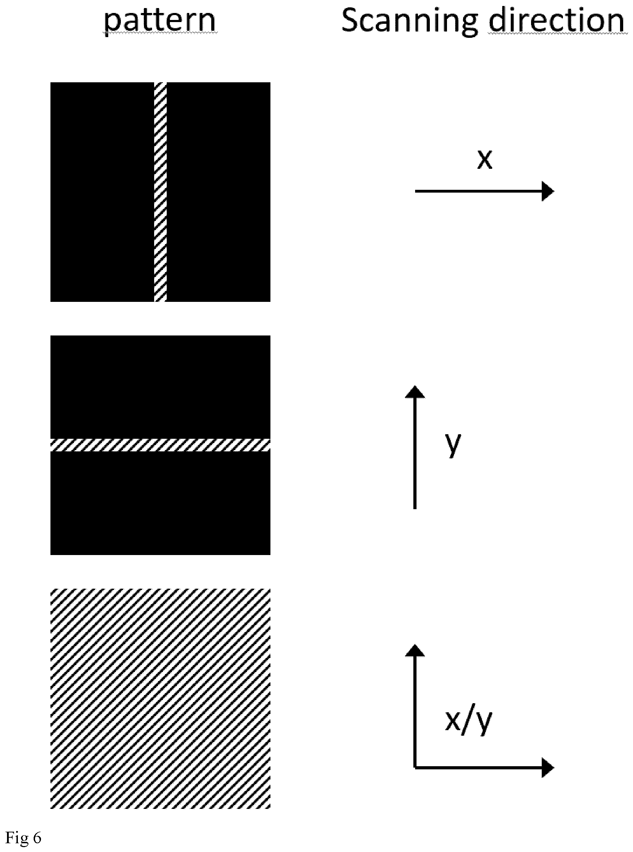

Fig. 6 shows useful illumination patterns for phase-sensitive imaging. With two orthogonal orientations of the line-shaped light source (hatched part), different information about the sample can be retrieved. The uniform illumination over the whole image (completely hatched, bottom) yields a standard brightfield illumination.

Two different orientations of the illumination line can be electronically switched to acquire all angles for each sample point not only in one direction, but along two independent axes. Fig. 6 shows in this respect effective illumination patterns in frequency space resulting when summing up the intensity of raw images in a defined way. These patterns are known in literature to be a possible basis to calculate phase information from. Light means illumination, black means no illumination. x and y axes are relative frequencies in units of the NA of the detection system. Top row can be achieved with a line-shaped illumination in y direction and scanning in y direction, bottom row can be achieved with a line-shaped illumination in x direction and scanning in y direction.

A third, homogeneous illumination of the diffusor is optionally integrated to quickly switch to a complete brightfield illumination which can be useful if only absorption is sufficient in the sample to generate sufficient contrast.

In yet another embodiment of the invention, the interaction information of the interaction light beams comprises phase information such that the raw image and the final images are phase-sensitive.

The phase of the sample can be reconstructed by applying the techniques from "Quantitative differential phase contrast microscopy - Optics Express 2015 -23-9-11394". By adding up the raw image slices from different angles on one side of the line, an effective illumination pattern is generated which takes up half of the frequency space, which is similar to the half-circle pattern from the original publication. By adding up different slices, the phase transfer function can be tweaked to be sensitive to the frequencies most desired for the application (or cell type).

### EXAMPLE

The following is an example of how to reconstruct the phase and the absorption from the different illumination images. It uses the code and input images from the public online repository https://github.com/Waller-Lab/DPC as a basis to show the possibility to reconstruct phase from the raw data generated with the above setup.

Starting point are images taken from the setup described above with the synthetic images for different angles as shown in Fig.3.

The sum of all those images with a positive illumination angle is referred to as DPC 02, the sum of those with a negative angle as DPC 03. When using the orthogonal line illumination, positive angle images correspond to DPC 00 and DPC 01, respectively.

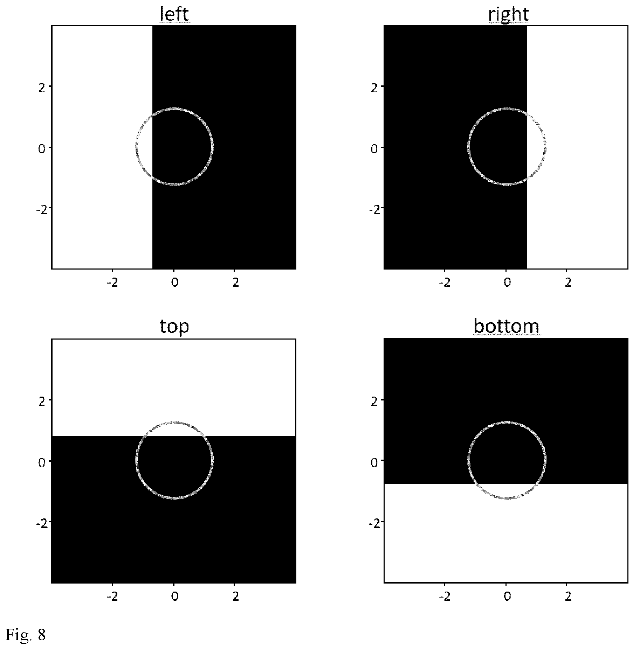

Fig. 8 shows effective illumination patterns in frequency space resulting when summing the intensity of raw images in a defined way. The invention allows to digitally adjust the cutoff angle or more generally, the illumination pattern in a way suitable for the target sample.

These are however taken with a different setup, but would be comparable to the ones described.

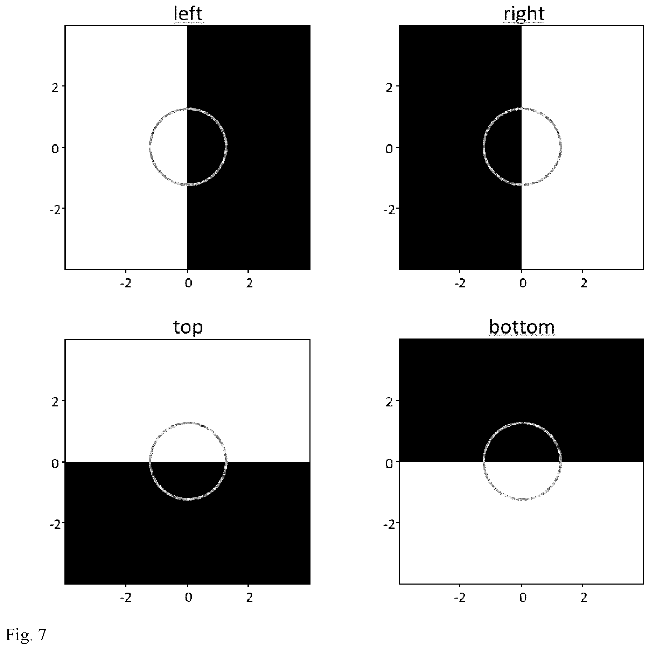

Fig. 7 visualizes the effective illumination sources for the different four synthetic images described above. These effective illumination patterns result in the four sets of transfer functions for the absorption and phase of the imaged object. Fig. 8 show the same situation for a different range of angles being summed up to the synthetic images. The advantage of this embodiment is that the frequency response can be tuned to frequencies relevant for the application and sample.

Since the brightfield and the darkfield zones have drastically different brightness (factor -100), it can be hard to capture these in one single exposure. The dynamic range can be improved by illuminating the line in one single color and using a color RGB camera, where the illuminating color is blocked by the internal Bayer filter for the corresponding pixels to an extent of >95%, for the pixels of the same color as the illumination, the blockage is considerably less, thus the different color channels of the camera can be used to measure different angular zones of the images at a more optimal working point.

### Combination with High-dynamic range acquisition

Using the method of the invention with the proposed illumination pattern inherently causes a wide range of light intensities across the image sensor. In another variant of the invention, an RGB sensor rather than a monochromatic one in conjunction with a monochromatic light source is used. By using such RGB sensor, an image can be captured and split into red, green, and blue channels. Assuming blue light (-450 nm wavelength) is being employed, naturally, the blue channel is the most sensitive to it. This channel could hence be used for darkfield areas (further away from the line). The green channel is used for the BF-DF transition areas since they are the most important for the application and allow making use of the higher pixel density in the green channel. Finally, the red channel will detect the least light and therefore allow for a certain dynamic range in the BF areas.

As further example, an experiment was conducted with green light. However, the application is analogous to blue light. The following, highly overexposed image was captured with 100 ms exposure time with a Raspberry Pi HQ Camera (IMX477 RGB sensor). The image was then split into red, green, and blue channels.

High-dynamic range algorithms can also be applied to further optimize the signal-to-noise ratio by not using the saturated parts of the brightest channel.

## Claims

1. Method for imaging a sample wherein at least one light source provides a plurality of light beams interacting with the sample under a plurality of interaction angles generating a plurality of interaction light beams and detecting the interaction information of the interaction light beams as raw image
**characterized in that**
a plurality of raw images is obtained by moving the light source and/or the sample relative to each other such that the light beams interact with the sample under different interaction and
wherein the raw images are converted into final images by combining the interaction information of the interaction light beams from each raw image having the same interaction angle into final images.

2. Method according to claim 1 **characterized in that** information of the interaction light beams from each raw image is combined wherein the interaction light beams have the same range of interaction angles.

3. Method according to claim 1 **characterized in that** the range of interaction angles is between -0.5NA to 0.5NA, 0.5 NA to 1.2 NA and 1.2 NA to 90°.

4. Method according to any of claim 1 to 3 **characterized in that** the light source is line-shaped.

5. Method according to any of claims 1 to 4 **characterized in that** the light beam and the sample are moved relative to each other in a continuous movement.

6. Method according to any of claims 1 to 4 **characterized in that** the light beam and the sample are moved relative to each other in steps corresponding to ranges of interaction angles

7. Method according to any of claims 1 to 6 **characterized in that** at least two light sources provide at least two pluralities of light beams having different wavelengths.

8. Method according to any of claims 1 to 7 **characterized in that** at least two light sources provide at least two pluralities of light beams sharing an angle of 5 to 90° with each other.

9. Method according to any of claims 1 to 8 **characterized in that** the interaction information of the interaction light beams comprises phase information such that the raw image and the final images are phase-sensitive.
